(19) Europäisches Patentamt
European Patent Office
Office européen des brevets

(11) **EP 2 341 257 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(51) Int Cl.:
*F16C 33/12* *(2006.01)*

(21) Anmeldenummer: **10194023.7**

(22) Anmeldetag: **07.12.2010**

(54) **Gleitschicht**

Sliding layer

Couche de glissement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2009 AT 19582009**

(43) Veröffentlichungstag der Anmeldung:
**06.07.2011 Patentblatt 2011/27**

(73) Patentinhaber: **Miba Gleitlager Austria GmbH 4663 Laakirchen (AT)**

(72) Erfinder: **Zidar, Jakob 4813, Altmünster (AT)**

(74) Vertreter: **Burger, Hannes Anwälte Burger & Partner Rechtsanwalt GmbH Rosenauerweg 16 4580 Windischgarsten (AT)**

(56) Entgegenhaltungen:
**WO-A2-2008/133316          DE-A1- 10 054 461
DE-A1- 19 728 777          DE-A1-102007 030 017
DE-U1- 8 206 353          DE-U1-202007 018 616
GB-A- 2 375 801**

**Beschreibung**

Die Erfindung betrifft eine Gleitschicht für ein Mehrschichtgleitlager aus einer Zinnbasislegierung, die neben Zinn als Hauptlegierungselement zumindest ein Element aus der Gruppe Antimon und Kupfer, gegebenenfalls Blei und/oder Bismut, sowie aus der Herstellung der Elemente stammende unvermeidbare Verunreinigungen enthält, wobei der Antimonanteil maximal 20 Gew.-%, der Kupferanteil maximal 10 Gew.-% und der Summenanteil an Blei und Bismut maximal 1,5 Gew.-% und der Summenanteil an Kupfer und Antimon zwischen 2 Gew.-% und 22 Gew.-% betragen, und wobei Zinn gebunden in Form intermetallischer Phasen und frei als Zinnphase mit Beta-Zinnkörnern vorliegt, sowie ein Mehrschichtgleitlager umfassend zumindest eine Stützmetallschicht, eine Gleitschicht und eine zwischen der Gleitschicht und der Stützmetallschicht angeordnete Lagermetallschicht.

Die Verwendung von Zinnbasislegierungen für Gleitschichten von Mehrschichtgleitlagern ist aus dem Stand der Technik bereits bekannt.

So beschreibt zum Beispiel die DE 82 06 353 U1 eine Gleitlagerschale bestehend aus einer Stahlstützschale, einer Tragschicht, eventuell einer oder mehrerer Bindungs- und/oder Sperrschichten, sowie einer galvanisch abgeschiedenen Gleitschicht aus einer Weißmetall-Lagerlegierung auf Zinnbasis mit maximal 2 Gew.-% Cu, 2 bis 18 Gew.-% Sb, 0 bis maximal 0,6 Gew.-% As, 0 bis maximal 0,5 Gew.% Ni und 0 bis maximal 1,5 Gew.% Cd.

Die DE 20 2007 018 616 U1 beschreibt ein Gleitelement das ebenfalls eine galvanisch auf eine Trägerschicht aufgebrachte Gleitschicht aus einer Zinnbasislegierung mit 5-20 Gew.-% Sb, 0,5-25 Gew.-% Cu und maximal 0,7 Gew.-% Pb. Der Gesamtgehalt sonstiger Anteile beträgt weniger als 0,5 Gew.-%. Wesentlich dabei ist, dass die Zinn-Kristalle überwiegend globular geformt sind.

Obwohl in der erstgenannten DE 82 06 353 U1 ausgeführt wird, dass ein höherer Kupferanteil nachteilig für die tribologischen Eigenschaften der Gleitschicht ist, wird in dieser DE 20 2007 018 616 U1 ausdrücklich die entgegengesetzte Lehre vertreten.

Zur Vermeidung der Reduktion des Kupferanteils in der Gleitschicht beschreibt die GB 2 375 801 A ein Mehrschichtlager mit einer zweischichtigen Gleitschicht, wobei die äußere Teilschicht aus einer Zinnbasislegierung mit 0,5-10 Gew.-% Cu und gegebenenfalls bis 5 Gew.-% Zn, In, Sb oder Ag, und die darunter liegende, zweite Teilschicht aus einer Zinnbasislegierung mit 5-20 Gew.-% Cu gebildet ist.

Aus der DE 10 2007 030 017 B4 ist eine Gleitschicht mit einer Zinnbasislegierung für ein so genanntes Rillenlager bekannt, bei dem diese Zinnbasislegierung in den Rillen der Gleitschicht eingelagert ist und die bis 20 Gew.-% Cu und gegebenenfalls bis zu 10 Gew.-% Ag bzw. bis zu 15 Gew.-% Sb enthält.

Auch die DE 100 54 461 A1 beschreibt ein Mehrschichtgleitlager mit einer dreischichtigen Gleitschicht auf Zinnbasis, um damit die Beständigkeit gegenüber fressendem Verschleiß zu erhöhen. Diese Zinnbasislegierung weist zumindest ein Metall aus einer Gruppe umfassend Cu, Sb, Ag, In, Zn, Ni, Co und Fe in einem Anteil bis 30 Gew.-% auf. Weiters können Hartpartikel in Form von Nitriden oder Carbiden in einem Anteil von bis 25 Vol.-% enthalten sein. In der Mittelschicht der Gleitschicht ist ein höherer Anteil an diesen Zusatzstoffen enthalten als in der oberen bzw. unteren Teilschicht.

Aus der DE 197 28 777 A1 ist eine Gleitschicht für ein Mehrschichtgleitlager bekannt, die neben Zinn zwischen 3 und 20 Gew.-% Cu und gegebenenfalls bis je 20 Gew.-% Bi, Ag oder Ni enthalten kann.

In der Vergangenheit wurden häufig auch Bleischichten als Gleitschichten eingesetzt, da Blei gegenüber Zinn deutlich Vorteile hat. Blei ist allerdings im Hinblick auf die Umweltverträglichkeit als problematisch anzusehen.

Es ist Aufgabe der Erfindung eine Gleitschicht anzugeben, die einen geringen Bleigehalt aufweist oder bleifrei ist.

Gelöst wird diese Aufgabe durch die eingangs genannte Gleitschicht, bei der die Beta-Zinnkörner in der Zinnbasislegierung zumindest eine Vorzugsorientierung aufweisen, sowie eigenständig hierzu durch das voranstehend genannte Mehrschichtgleitlager, welches die erfindungsgemäße Gleitschicht aufweist.

Zur quantitativen Beschreibung der Vorzugsorientierung wird der Orientierungsindex $M\{hkl\}$ definiert:

$$M\{hkl\} = \frac{I\{hkl\}\sum I^{0}\{hkl\}}{I^{0}\{hkl\}\sum I\{hkl\}}$$

wobei $I\{hkl\}$ die XRD Intensitäten (Röntgenbeugungsintensitäten) für die $\{hkl\}$ Ebenen der Gleitschicht und $I^{0}\{hkl\}$ die XRD Intensitäten der völlig unorientierten Zinn-Pulverprobe (ICDD PDF 00-004-0673) darstellen.

Die Summe der Beugungsintensitäten $\sum I\{hkl\}$ bzw. $\sum I^{0}\{hkl\}$ muss über denselben Bereich erfolgen, beispielsweise alle Intensitäten der Reflexe von $\{200\}$ bis $\{431\}$ umfassen, was bei Verwendung von $CuK\alpha$-Strahlung allen Reflexen mit einem Beugungswinkel $2\theta$ zwischen 30° und 90° entspricht.

Eine erfindungsgemäße Vorzugsorientierung liegt vor, wenn der Orientierungsindex zumindest einer Netzebenenschar $M\{hkl\}$ 3,0 erreicht oder übersteigt.

Auf der Suche nach bleiarmen bzw. bleifreien Gleitschichten hat die Anmelderin unter anderem auch Zinnbasislegierungen mit einem Gehalt an Kupfer und /oder Antimon untersucht und überraschend festgestellt, dass manche dieser Zinnbasislegierungen deutlich bessere tribologische Eigenschaften und/oder eine deutlich höhere Dauerfestigkeit aufwiesen als andere.

Durch Untersuchungen der Struktur dieser Zinnbasislegierungen mittels Röntgendiffraktometrie konnte aus dem Beugungsmustern festgestellt werden, dass die Beta-Zinnkristallite in diesen Zinnbasislegierungen eine deutliche Orientierung von symmetriebedingt äquivalenten Ebenen in eine Richtung aufwiesen. Obwohl dieses Material an und für sich relativ weich ist und somit ausgezeichnete Eigenschaften hinsichtlich der Einbettungsfähigkeit von Schmutzpartikeln aufweist, wiesen die erfindungsgemäßen Zinnbasislegierungen aber auch eine bessere Verschleißbeständigkeit und/oder eine höhere Dauerfestigkeit auf. Es wird vermutet, dass letzteres bedingt wird durch die orientierten Zinnkristallite, wobei durch Polmessungen festgestellt wurde, dass die Texturierung der Gleitschicht rotationssymetisch zur Normale auf die Oberfläche ausgebildet ist.

Im Zuge der XRD Untersuchungen zeigte sich auch, dass bereits geringe Veränderungen der Oberfläche, die sich allerdings nicht auf die Verschleißbeständigkeit oder Dauerfestigkeit der gesamten Schicht auswirken, eine deutliche Änderung des gemessenen Diffraktogramms bewirken. Die scheinbare Veränderung der Vorzugsorientierung der Gleitschicht ist allerdings ein Artefakt, das von der geringen Eindringtiefe der Röntgenstahlung herrührt. Zur Bestimmung der Vorzugsorientierung ist daher eine gestörte Oberfächenzone sorgfältig, beispielsweise durch Ionenätzung, zu entfernen oder noch bevorzugter deren Entstehung zu vermeiden. Eine Störung der Oberflächenzone kann beispielsweise durch mechanische Bearbeitung nach der Beschichtung, Verschleiß im Betrieb oder die Auftragung einer Einlauf- oder Korrosionsschutzbeschichtung erfolgen.

Vorzugsweise ist der Wert des Orientierungsindex $M\{hkl\}$ zumindest einer Netzebenenschar gemäß Miller Index mindestens 6,0, insbesondere mindestens 9,0.

Überraschenderweise zeigte sich eine Verbesserung der Verschleißbeständigkeit und eine Erhöhung der Dauerfestigkeit auch bei erfindungsgemäßen Schichten, die sich sonst, also beispielsweise in der Zusammensetzung, Härte oder Oberflächenrauigkeit nicht oder kaum von Schichten nach dem Stand der Technik unterschieden.

Dieser Effekt trat insbesondere auf, wenn die Beta-Zinnkörner nach zumindest einer der Ebenen $\{hkl\}$ gemäß Millerindex orientiert sind, wobei h jeweils um 1 größer ist als k, und h maximal einen Wert von 4 annimmt.

Dabei ist von Vorteil, wenn die Fläche unter dem Peak, d.h. die Intensität, die von Beta-Zinnkörnern erzeugt wird, die nach $\{321\}$ gemäß Milder Index orientiert sind, im Röntgendiffraktogramm zumindest 1,2 mal so groß ist wie die Fläche unter dem Peak, d.h. der Intensität, die von nach $\{421\}$ orientierten Beta-Zinnkörnern erzeugt wird, wodurch die genannten Effekte weiter verbessert werden konnten.

Überraschenderweise trat der genannte Effekt aber auch dann auf, wenn diese allgemeine, voranstehend genannte Regel nicht oder nur teilweise erfüllt ist, sondern die Struktur der Zinnbasislegierung Beta-Zinnkörner aufweist, die zumindest im Umfang von 30 %, insbesondere von 40 %, vorzugsweise von 50 %, nach $\{220\}$ gemäß Milderindex orientiert sind, ausgedrückt durch die Fläche unterhalb des Peaks, die durch diese Orientierung der Beta-Zinnkörner erzeugt wird, d.h. dessen Intensität.

Bevorzugt wird im Rahmen der Erfindung, wenn der Antimonanteil zwischen 5 Gew.-% und 15 Gew.-% beträgt bzw. wenn der Kupfergehalt zwischen 0,5 Gew.-% und 5 Gew.-% beträgt. Es konnten damit Gleitschichten hergestellt werden, die neben der guten Einbettfähigkeit auch eine bessere Abriebfestigkeit aufwiesen.

Insbesondere kann der Antimonanteil zwischen 7 Gew.-% und 12 Gew.-% bzw. kann der Kupfergehalt zwischen 1 Gew.-% und 3,75 Gew.-% betragen.

Obwohl prinzipiell nach bleifreien Gleitschichten gesucht wurde, ist es im Rahmen der Erfindung möglich, dass ein Bleigehalt von maximal 0,1 Gew.-%, insbesondere maximal 0,05 Gew.-%, zulässig ist, wobei diese Ausführungen der Erfindung als bleifrei im Sinne der EU-Altauto-Richtline (Directive 2000/53/EC "ELV-Directive") gelten.

Für manche Anwendungen erweist es sich allerdings als Vorteil, wenn die Zinnbasislegierungen einen höheren Bleigehalt und/oder Bismutgehalt aufweist, wobei aber auch in diesen Fällen der Bleigehalt und/oder der Bismutgehalt auf einen Wert zwischen 0,2 Gew.-% und 0,5 Gew.-% beschränkt wird, insbesondere auf einen Wert zwischen 0,2 Gew.-% und 0,35 Gew.-%. Es wird vermutet, dass sich Blei an den Korngrenzen anlagert und deren Festigkeit erhöht. Bismut hat offenbar dieselbe Funktion und kann in bleifreien Legierungen das Blei ersetzen.

Eine Erhöhung des Blei- und/oder Bismutgehaltes über 1,5 Gew.-% führt zu einer starken Abnahme der Warmfestigkeit der Legierungsschicht und ist somit nicht vorteilhaft.

Zur weiteren Verbesserung der Abriebfestigkeit, das heißt um der Gleitschicht eine höhere Härte zu verleihen, ist es von Vorteil, wenn der Zinnbasislegierung zumindest ein Element aus einer Gruppe umfassend Zirkonium, Silizium, Zink, Nickel und Silber in einem Anteil von in Summe maximal 3 Gew.-% zulegiert wird. Dabei kann der Anteil an Zirkonium auch maximal 1,5 Gew.-%, jener des Siliziums maximal 1,2 Gew.-% betragen.

In einer Ausführungsvariante hierzu besteht allerdings die Möglichkeit, dass Zirkonium bzw. Silizium nicht elementar bzw. als intermetallische Phasen vorliegen, sondern die Zinnbasislegierung auch einen Gehalt an Sauerstoff und/oder Kohlenstoff enthält, sodass Hartpartikel aus $ZrO_2$ bzw. SiC in der Zinnbasislegierung dispergiert vorliegen, wodurch ebenfalls die Festigkeit der Gleitschicht verbessert werden kann.

Dabei ist es von Vorteil, wenn diese ZrO$_2$- bzw. SiC-Partikeln einen mittleren Durchmesser zwischen 0,01 $\mu$m und 1 $\mu$m aufweisen, wodurch eine feinkörnigere Struktur erzielt wird. Es wurde beobachtet, dass Partikeldurchmesser größer 1 $\mu$m den voranstehend beschriebenen Effekt stören.

Gemäß einer Ausführungsvariante des Mehrschichtgleitlagers ist vorgesehen, dass zwischen der Lagermetallschicht und der Gleitschicht eine Zwischenschicht angeordnet ist, die aus einer oder mehreren Teilschichten besteht, die galvanisch abgeschieden oder durch Diffusion gebildet werden, und jede der Teilschichten bzw. die Zwischenschicht selbst eines oder mehrere der Elemente aus der Gruppe Chrom, Nickel, Eisen, Kobalt, Kupfer und Zinn enthält. Es konnte damit dem Mehrschichtgleitlager eine bessere Strukturfestigkeit verliehen werden, insbesondere im Hinblick auf die relativ weiche Zinnbasislegierung der Gleitschicht.

Dabei ist es von Vorteil, wenn die Zwischenschicht eine Härte aufweist, die um mindestens das Dreifache größer ist als die Härte der Gleitschicht, und auch größer ist als die Härte des Untergrundmaterials, auf dem die Zwischenschicht angeordnet wird, wodurch die Gleitschicht eine bessere Abstützung am Untergrund erfährt und damit die Gleitschicht bessere, tribologische Eigenschaften aufweist bzw. weicher ist.

Von Vorteil ist es dabei, wenn die Härte der Zwischenschicht um mindestens das Fünffache größer ist als die Härte der Gleitschicht.

Zum besseren Verständnis der Erfindung wird diese anhand der nachfolgenden Figuren näher erläutert.

Es zeigen teilweise in schematisch vereinfachter Darstellung:

Fig. 1    ein Mehrschichtgleitlager in Form einer Gleitlagerhalbschale;

Fig. 2    das Röntgendiffraktionsmuster der Oberfläche einer erfindungsgemäßen Gleitschicht aus SnSb11Cu4Bi;

Fig. 3    das Röntgendiffraktogramm einer erfindungsgemäßen Gleitschicht aus SnSb7CuPb ZrO$_2$;

Fig. 4    das Röntgendiffraktogramm einer erfindungsgemäßen Gleitschicht aus SnCu3;

Fig. 5    Röntgendiffraktogramme aufgenommen an einem Prüfgleitlager mit einer erfindungsgemäßen Gleitschicht aus SnSb8CuPb,
oben vor Prüfung,
in der Mitte nach dem Prüflauf, verfälscht durch die durch den Verschleiß gestörte Oberflächenzone,
unten nach Entfernung der gestörten Oberflächenzone durch Ionenätzen;

Fig. 6    das Röntgendiffraktogramm einer Gleitschicht nach dem Stand der Technik der Zusammensetzung SnSb7Cu1Pb;

Fig. 7    das Röntgendiffraktogramm einer Gleitschicht nach dem Stand der Technik der Zusammensetzung SnCu6Pb1.

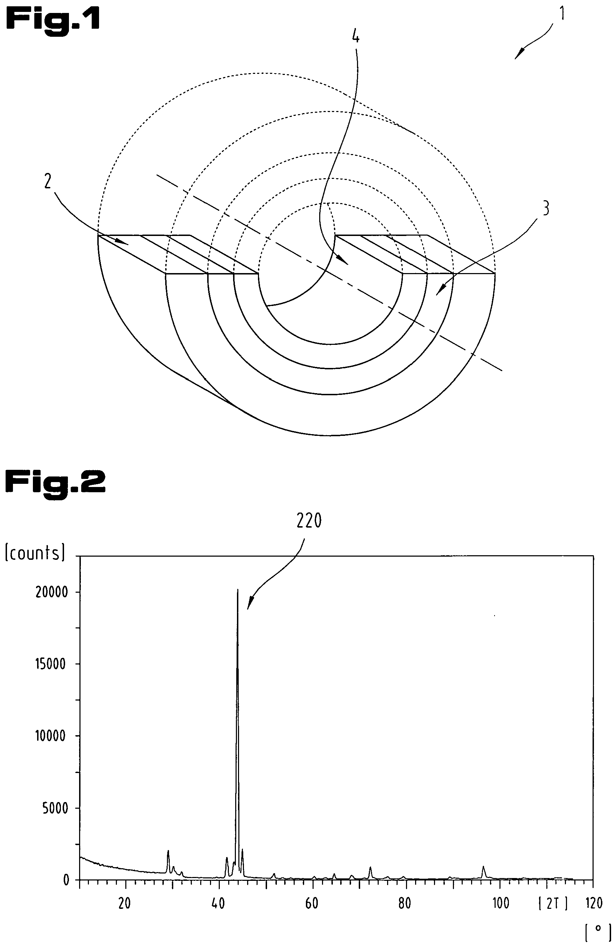

Fig. 1 zeigt einen Querschnitt durch ein Mehrschichtgleitlager 1 in Form einer Gleitlagerhalbschale. Dargestellt ist eine dreischichtige Variante des Mehrschichtgleitlagers 1, bestehend aus einer Stützmetallschicht 2, einer Lagermetallschicht 3 und einer Gleitschicht 4. Die Lagermetallschicht 3 ist zwischen der Gleitschicht 4 und der Stützmetallschicht 2 angeordnet.

Der prinzipielle Aufbau derartiger Dreischichtlager, wie sie z.B. in Kraftfahrzeugen Verwendung finden, ist aus dem Stand der Technik bekannt. Es können bekanntermaßen weitere Schichten angeordnet werden, beispielsweise zwischen der Gleitschicht 4 und der Lagermetallschicht 3 eine Haftvermittlerschicht und/oder eine Diffusionssperrschicht, ebenso kann zwischen der Lagermetallschicht 3 und der Stützmetallschicht 2 eine Haftmittelschicht angeordnet werden.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Daneben besteht im Rahmen der Erfindung die Möglichkeit, dass auf die Lagermetallschicht 3 verzichtet wird, sodass die Gleitschicht 4 entweder direkt oder unter Zwischenanordnung eines Haftvermittlers und/oder einer Diffusionssperrschicht auf die Stützmetallschicht 2 aufgebracht sein kann. Ebenso sind im Rahmen der Erfindung auch Direktbeschichtungen, beispielsweise von Pleuelaugen, möglich, sodass also die Stützmetallschicht 2 nicht zwingend schichtartig ausgeführt ist.

Die Stützmetallschicht 2 besteht üblicherweise aus Stahl bzw. einem Werkstoff, welcher dem Mehrschichtgleitlager 1 die erforderliche Strukturfestigkeit verleiht. Derartige Werkstoffe sind aus dem Stand der Technik bekannt.

Als Lagermetallschicht 3 können unterschiedlichste Legierungen, wie sie für Gleitlagerelemente üblich sind, eingesetzt werden. Beispiele hierfür sind:

1. Lagermetalle auf Aluminiumbasis (nach DIN ISO 4381 bzw. 4383):

AlSn6CuNi, AlSn20Cu, AlSi4Cd, AlCd3CuNi, AlSi11Cu, AlSn6Cu, AlSn40, AlSn25CuMn, AlSi11CuMgNi, AlZn4Si.

2. Lagermetalle auf Kupferbasis (nach DIN ISO 4383):

CuSn10, CuAl10Fe5Ni5, CuZn31Si, CuPb24Sn2, CuSn8Bi10, CuSn4Zn.

Selbstverständlich können auch andere als die genannten Lagermetalle verwendet werden.

Erfindungsgemäß besteht die Gleitschicht 4 aus einer Zinnbasislegierung, die zumindest ein Element aus einer Gruppe bestehend aus Antimon und Kupfer, sowie gegebenenfalls Blei und/oder Bismut enthält. Der Anteil an Antimon beträgt maximal 20 Gew.-%, insbesondere zwischen 5 Gew.-% und 15 Gew.-%, jener an Kupfer maximal 10 Gew.-%, insbesondere zwischen 0,5 Gew.-% und 5 Gew.-%. Der Summenanteil an Blei und/oder Bismut beträgt maximal 1,5 Gew.-%, insbesondere zwischen 0,2 Gew.-% und 0,5 Gew.-%. Sofern sowohl Antimon als auch Kupfer enthalten sind, beträgt der Summenanteil dieser Elemente zwischen 2 Gew.-% und 22 Gew.-%. Für im Sinne der Erfindung bleifreie Zinnbasislegierungen ist der Bleigehalt auf maximal 0,1 Gew.-%, bevorzugt maximal 0,05 Gew.-%, beschränkt.

Zur Verstärkung der Zinnmatrix kann die Zinnbasislegierungen zumindest ein Element aus einer Gruppe umfassend Zirkonium, Silizium, Zink, Nickel und Silber enthalten, wobei deren Summenanteil auf maximal 3 Gew.-% beschränkt ist. Dabei kann bzw. können das Zirkonium bzw. das Silizium nicht als intermetallische Phasen vorliegen, sondern in Form von $ZrO_2$- bzw. SiC-Partikeln. In diesem Fall ist es von Vorteil, wenn der mittlere Durchmesser dieser Partikel auf 0,01 $\mu$m bis 1 $\mu$m, insbesondere 0,05 $\mu$m bis 0,75 $\mu$m, beschränkt wird.

Die Schichtdicke der Gleitschicht 4 kann zwischen 10 $\mu$m und 2000 $\mu$m betragen. Dabei werden Schichtdicken zwischen 500 $\mu$m und 2000 $\mu$m verwendet, wenn eine Beschichtung direkt auf der Stützmetallschicht 1 erfolgt, Schichtdicken die vorzugsweise zwischen 100 $\mu$m und 400 $\mu$m betragen, sofern die Gleitschicht 4 beispielsweise als Ersatz für Gussweißmetalle auf Bronze verwendet wird und bei Verwendung der Gleitschicht 4 beispielsweise als Laufschicht in Dreistofflagern werden Schichtdicken zwischen 15 $\mu$m und 40 $\mu$m bevorzugt.

Wie bereits erwähnt, können im Mehrschichtgleitlager 1 auch Zwischenschichten angeordnet werden. Diese Zwischenschichten können entweder einschichtig ausgebildet sein oder aus mehreren Teilschichten bestehen. Insbesondere sind diese Zwischenschichten aus einem Element aus der Gruppe Chrom, Nickel, Eisen, Kupfer oder Zinn gebildet, wobei auch Mischvarianten möglich sind, also beispielsweise Zwischenschichten verwendet werden, die zumindest zwei dieser Elemente enthalten, z.B. aus Chrom und Nickel oder Eisen und Zinn bestehen. Für Zwischenschichten aus mehreren Teilschichten können die Anteile in den einzelnen Teilschichten unterschiedlich sein, beispielsweise kann der Gehalt an härtenden Legierungselementen Chrom, Nickel, Eisen, Kupfer von der äußersten Teilschicht unterhalb der Gleitschicht 4 beginnend in Richtung auf die Lagermetallschicht 3 oder die Stützmetallschicht 2 von einer Teilschicht auf die (jeweils) nächste Teilschicht zunehmen, beispielsweise auch in Form eines Gradienten.

Im Hinblick auf die Haftvermittlung hat es sich als vorteilhaft erwiesen, wenn als Zwischenschicht für das erfindungsgemäße Mehrschichtgleitlager 1 eine Zinnschicht oder eine Schicht aus einer Zinnbasislegierung verwendet wird.

Anstelle der angegebenen bevorzugten Zwischenschichten können auch andere, dem Stand der Technik entsprechende Zwischenschichten verwendet werden.

Die Zwischenschicht bzw. die Summe der Teilschichten kann eine Schichtdicke zwischen 0,5 $\mu$m und 10 $\mu$m, bevorzugt 1 $\mu$m bzw. 4 $\mu$m, aufweisen. Insbesondere ist es von Vorteil, wenn diese Zwischenschicht insgesamt bzw. zumindest eine der Teilschichten um das Dreifache härter ist als die Gleitschicht 4 und härter ist als das Grundmaterial. Die Gleitschicht 4 kann beispielsweise eine Härte nach Vickers von 10 bis 50 aufweisen, sodass also die Zwischenschicht bzw. zumindest eine der Teilschichten eine Härte von HV 80 bis HV 300 aufweisen kann. Die Höhe der Prüfkraft richtet sich dabei bekanntermaßen nach der Schichtdicke der zu messenden Schicht. Bis zu einer Schichtdicke von 40 $\mu$m wird eine Prüfkraft zwischen 1 Pond und 3 Pond, zwischen 80 $\mu$m und 300 $\mu$m eine Prüfkraft bis 10 Pond verwendet.

Die Gleitschicht 4 wird bevorzugt galvanisch hergestellt. Dazu wird vorab ein Bimetallstreifen aus einer Stahlstützschicht und einer Lagermetallschicht 3 hergestellt und gegebenenfalls umgeformt und/oder spanabhebend bearbeitet. Auf der Lagermetallschicht 3 wird die erfindungsgemäße Gleitschicht 4 unter folgenden Bedingungen abgeschieden:

Elektrolyt und Abscheideparameter für SnSb6Cu mit {hk1}-Ausrichtung

| | | |
|---|---|---|
| Sn | 35 g/l | (als Zinn(II)tetrafluoroborat) |
| Sb | 3 g/l | (als Antimontrifluorid) |
| Cu | 0,5 g/l | (als Kupfer(II)tetrafluoroborat |

Stabilisator(en) bzw. Grundelektrolyt(e), Leitsalz(e) oder Komplexbildner Oxidationsinhibitor(en)
Additiv 1 und/oder 2

| | |
|---|---|
| Stromdichte | 2 A/dm$^2$ |
| Temperatur | 35°C |

Elektrolyt und Abscheideparameter für SnSb11Cu4Bi mit {220}-Ausrichtung

| | | |
|---|---|---|
| Sn | 50 g/l | (als Zinn(II)tetrafluoroborat) |
| Sb | 6 g/l | (als Antimontrifluorid) |
| Cu | 4 g/l | (als Kupfer(II)tetrafluoroborat |
| Bi | 0,5 g/l | (als Bismut(III)methansulfonat) |

Stabilisator(en) bzw. Grundelektrolyt(e), Leitsalz(e) oder Komplexbildner Oxidationsinhibitor(en)
Additive 1 und/oder 2

| | |
|---|---|
| Stromdichte | 3 A/dm$^2$ |
| Temperatur | 15°C |

Zinn kann dabei als Zinn(II)tetrafluoroborat, Zinn(II)methansulfonat, Zinn(II)sulfat, Zinn(II)pyrophosphat eingesetzt werden. Generell kann die Konzentration an Zinn im Elektrolyt zwischen 0,1 mol/l und 1 mol/l betragen.

Antimon kann als Antimon(III)tetrafluoroborat, Antimontrifluorid, Antimon(III)oxid, Kaliumantimontartrat eingesetzt warden. Generell kann die Konzentration an Antimon im Elektrolyt bis zu 0,3 mol/l betragen.

Kupfer kann als Kupfer(II)tetrafluoroborat, Kupfer(II)methansulfonat, Kupfer(II)sulfat, Kupfer(II)pyrophosphat eingesetzt werden. Generell kann die Konzentration an Kupfer im Elektrolyt bis zu 0,3 mol/l betragen.

Blei kann als Blei(II)tetrafluoroborat, Blei(II)methansulfonat, Blei(II)pyrophosphat, Bleiacetat eingesetzt werden. Generell kann die Konzentration an Blei im Elektrolyt bis zu 0,01 mol/l betragen.

Bismut kann als Bismuttrifluorid, Bismut(III)methansulfonat, Bismut(III)sulfat, Bismut(III)pyrophosphat eingesetzt werden. Generell kann die Konzentration an Bismut im Elektrolyt bis zu 0,01 mol/l betragen.

Silber kann als Silbertetrafluoroborat, Silbermethansulfonat, Silberpyrophosphat, Silbersulfat eingesetzt werden. Generell kann die Konzentration an Silber im Elektrolyt bis zu 0,3 mol/l betragen.

Zink kann als Zink(II)tetrafluoroborat, Zink(II)methansulfonat, Zink(II)sulfat, Zink(II)pyrophosphat eingesetzt werden. Generell kann die Konzentration an Zink im Elektrolyt bis zu 0,3 mol/l betragen.

Nickel kann als Nickel(II)tetrafluoroborat, Nickel(II)methansulfonat, Nickel(II)sulfat, Nickel(II)pyrophosphat eingesetzt werden. Generell kann die Konzentration an Nickel im Elektrolyt bis zu 0,3 mol/l betragen.

Mögliche Stabilisatoren bzw. Grundelektrolyte, Leitsalze oder Komplexbildner sind: Tetrafluoroborsäure, Flusssäure, Methansulfonsäure, Weinsäure und deren Alkali- und Ammoniumsalze, Citronensäure und deren Alkali- und Ammoniumsalze, Ammonium- und Alkalipyrophosphate, Phosphonsäure und deren Alkali- und Ammoniumsalze, 2,2-Ethylendithiodiethanol, Phenol - und Kresolsulfonsäuren, in einer Gesamtkonzentration zwischen 0,2 mol/l und 2 mol/l.

Mögliche Oxidationsinhibitoren sind: Resorcin, Hydrochinon, Brenzkatechin, Pyrogallol, Formaldehyd, Methanol, in einer Gesamtkonzentration zwischen 0,03 mol/l und 0,3 mol/l.

Mögliche Additive 1 sind: Phenolphthalein, Thioharnstoff und dessen Derivate, Alpha- oder Beta-Naphtol und deren Ethoxylate, Alpha- und Beta-Naphtholsulphonsäure und deren Ethoxylate, o-Toluidin, Hydroxychinolin, Ligninsulfonat, Butindiol, in einer Gesamtkonzentration zwischen 0,0005 mol/l und 0,05 mol/l, bevorzugt 0,002 mol/l und 0,02 mol/l.

Mögliche Additive 2 sind: Gelatine, Leim, Nichtionische Tenside, Polyethylenglycol und dessen funktionalisierte Derivate, Pepton, Glycin, in einer Gesamtkonzentration zwischen 0 g/l - 20 g/l.

Es können jeweils auch Mischungen aus den voranstehend genannten Bestandteilen der Elektrolyte verwendet werden, also z.B. zumindest zwei Salze eines bzw. des jeweiligen Metalls und/oder zumindest zwei Stabilisatoren und/oder zumindest zwei Oxidationsinhibitoren und/oder zumindest zwei Additive 1 und/oder zumindest zwei Additive 2.

Zirkonium bzw. Silizium können in Form von ZrO$_2$- oder SiC Partikeln mit der beschriebenen Korngröße in dem Bad dispergiert sein.

Zink, Nickel, Blei, Bismut, Silber und andere Legierungselemente können in Form der oben genannten, löslichen Verbindungen oder Komplexe einem entsprechenden Elektrolyten zugesetzt und aus diesem mit abgeschieden werden. Ebenso ist eine Legierungsbildung durch Eindiffusion der Elemente in die Schicht oder Mitabscheidung von im Elektrolyten suspendierten Partikeln möglich.

Die so hergestellten Gleitschichten 4 weisen eine ausgeprägte Beta-Zinnphase auf, in der mit einzelnen der und/oder zwischen den weiteren Legierungsbestandteile(n) gebildete intermetallische Phasen vorliegen.

Im Rahmen von Tests der Gleitschicht 4 wurden neben dem Stand der Technik entsprechende folgende erfindungsgemäße, beispielhafte Legierungszusammensetzungen hergestellt. Sämtliche Angaben zu Zusammensetzungen in den folgenden Tabelle 1, 2 und 3 sind als Gew.-% zu verstehen. Den Rest auf 100 Gew.-% bildet jeweils Zinn.

In den Tabellen 1, 2 und 3 sind auch die Prüfergebnisse für die entsprechenden Gleitschichten 4 wiedergegeben.

Die Prüfung erfolgte an Gleitlagerhalbschalen entsprechend Fig. 1 aus einer Stahlstützschicht 2 und einer Bleibronze Lagermetallschicht 3 mit einer Gleitschicht 4 von 25 - 35 $\mu$m Schichtdicke. Die Prüfung der Lagerschalen erfolgte mit schwellender Last und einer spezifische Lastamplitude von 60 MPa über 3 Millionen Lastzyklen bei einer Gleitgeschwindigkeit von 12 m/s.
Nach der Prüfung wurden die Halbschalen vermessen und so der Verschleiß der Gleitschicht 4 bestimmt. Die Dauerfestigkeit der Gleitschicht 4 wurde optisch beurteilt.

Die optische Bewertung von 1 bis 5 deckt den Zustand von sehr gut (1: Laufspuren) bis sehr schlecht (5: großflächige, starke Dauerbrüche) ab.

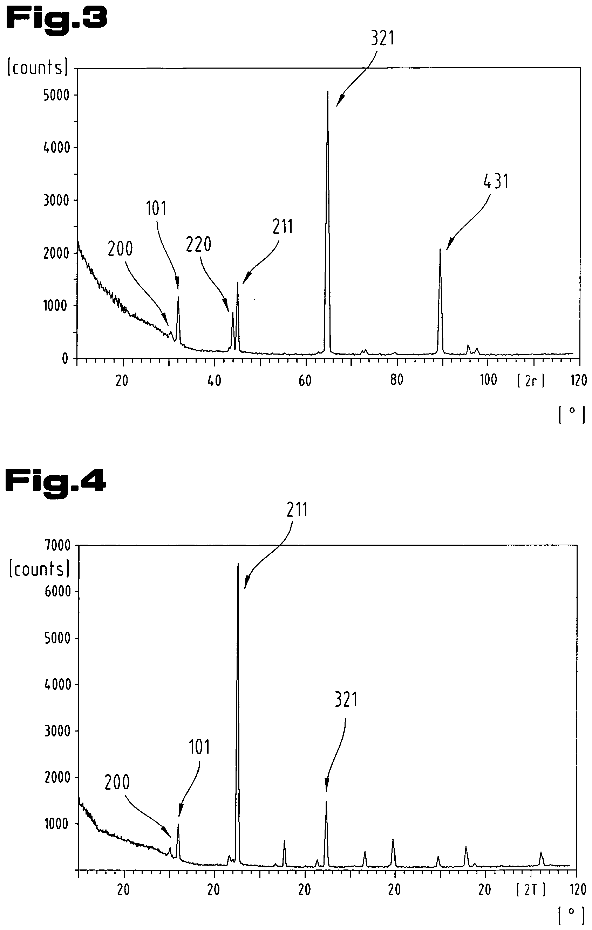

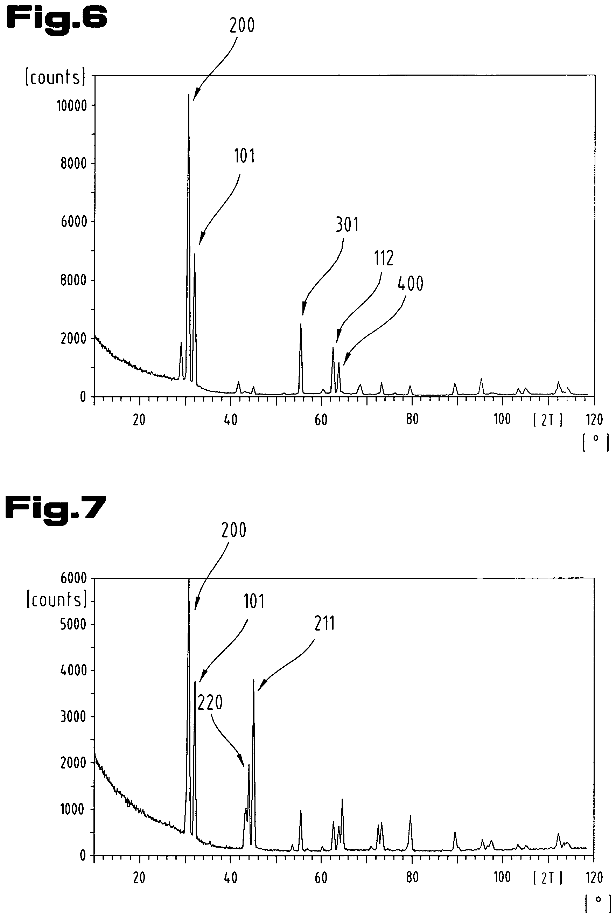

Tabelle 1 zeigt die Prüfergebnisse jener Gleitschichten 4, deren Diffraktogramme in den Figuren 2 - 7 exemplarisch dargestellt werden. Es werden auch die aus den Diffraktogrammen abgelesenen Intensitäten und die daraus berechneten Orientierungsindizes präsentiert. Die Proben 1 - 4 (Fig. 2 - Fig. 5) stellen erfindungsgemäße Gleitschichten 4 dar. Die Proben 5 - 6 (Fig. 6 und Fig 7) stellen Gleitschichten 4 nach dem Stand der Technik dar.

Tabelle 2 zeigt weitere Ergebnisse, die an erfindungsgemäßen Schichten gewonnen wurden.

Tabelle 3 zeigt weitere Ergebnisse, die an zu Vergleichszwecken hergestellten Schichten nach dem Stand der Technik gewonnen wurden.

Tabelle 1:

| Nr [1] | Fig. | Relative Intensität I {hkl} | | | | | | | | | | | | |
|---|---|---|---|---|---|---|---|---|---|---|---|---|---|---|
| | | {200} | {101} | {220} | {211} | {301} | {112} | {400} | {321} | {420} | {411} | {312} | {431} | Σ |
| Sn [2] | | 100 | 90 | 34 | 74 | 17 | 23 | 13 | 20 | 15 | 15 | 20 | 13 | 434,0 |
| 1 | 2 | 2,7 | 1,6 | 100 | 10,3 | 0,3 | 0,5 | 0 | 2 | 3,9 | 0,4 | 0,8 | 0,7 | 123,2 |
| 2 | 3 | 2,3 | 17,7 | 14,8 | 26,2 | 0,4 | 0,7 | 0 | 100 | 1,3 | 1,8 | 1 | 40,7 | 206,9 |
| 3 | 4 | 2,8 | 11 | 2 | 100 | 8,7 | 2,3 | 0 | 21,5 | 0 | 4,8 | 7,9 | 3,4 | 164,4 |
| 4 | 5 oben | 0 | 1,7 | 3,1 | 81,7 | 0,8 | 0 | 0 | 100 | 0 | 12,2 | 0,6 | 18,9 | 219 |
| 4 | 5 Mitte | 30 | 65,5 | 27,1 | 100 | 9,7 | 5,7 | 2,3 | 51,8 | 2,7 | 11,3 | 6,9 | 12,9 | 325,9 |
| 4 | 5 unten | 5,5 | 12,7 | 5,5 | 82,6 | 3,9 | 1,9 | 0 | 100 | 0 | 16,3 | 0,9 | 20,3 | 249,6 |
| 5 | 6 | 100 | 45,8 | 0,8 | 2,6 | 22,8 | 15,8 | 0 | 10,8 | 0 | 4,4 | 2,6 | 3,7 | 209,3 |
| 6 | 7 | 100 | 61 | 31,1 | 65 | 2,1 | 11 | 9,6 | 20 | 10,1 | 10,8 | 13,2 | 6,4 | 340,3 |

[1] Proben Nummer
[2] Pulver (ICDD PDF 00-004-0673)

Tabelle 1: Fortsetzung

| Nr.[1] | Orientierungsindex M {hkl} | | | | | | | | | | | |
|---|---|---|---|---|---|---|---|---|---|---|---|---|
| | {200} | {101} | {220} | {211} | {301} | {112} | {400} | {321} | {420} | {411} | {312} | {431} |
| Sn [2] | 1,0 | 1,0 | 1,0 | 1,0 | 1,0 | 1,0 | 1,0 | 1,0 | 1,0 | 1,0 | 1,0 | 1,0 |
| 1 | 0,1 | 0,1 | 10,4 | 0,5 | 0,1 | 0,1 | 0,0 | 0,4 | 0,9 | 0,1 | 0,1 | 0,2 |
| 2 | 0,0 | 0,4 | 0,9 | 0,7 | 0,0 | 0,1 | 0,0 | 10,5 | 0,2 | 0,3 | 0,1 | 6,6 |
| 3 | 0,1 | 0,3 | 0,2 | 3,6 | 1,4 | 0,3 | 0,0 | 2,8 | 0,0 | 0,8 | 1,0 | 0,7 |
| 4 | 0,0 | 0,0 | 0,2 | 2,2 | 0,1 | 0,0 | 0,0 | 9,9 | 0,0 | 1,6 | 0,1 | 2,9 |
| 4 | 0,4 | 1,0 | 1,1 | 1,8 | 0,8 | 0,3 | 0,2 | 3,4 | 0,2 | 1,0 | 0,5 | 1,3 |
| 4 | 0,1 | 0,2 | 0,3 | 1,9 | 0,4 | 0,1 | 0,0 | 8,7 | 0,0 | 1,9 | 0,1 | 2,7 |

(fortgesetzt)

| Nr.[1] | Orientierungsindex M {hkl} | | | | | | | | | | | |
|---|---|---|---|---|---|---|---|---|---|---|---|---|
| | {200} | {101} | {220} | {211} | {301} | {112} | {400} | {321} | {420} | {411} | {312} | {431} |
| 5 | 2,1 | 1,1 | 0,0 | 0,1 | 2,8 | 1,4 | 0,0 | 1,1 | 0,0 | 0,6 | 0,3 | 0,6 |
| 6 | 1,3 | 0,9 | 1,2 | 1,1 | 0,2 | 0,6 | 0,9 | 1,3 | 0,9 | 0,9 | 0,8 | 0,6 |

[1] Proben Nummer
[2] Pulver (ICDD PDF 00-004-0673)

Tabelle 1: Fortsetzung

| Nr. | Chemische Analyse (Gew.-%) | | | | | | Test Ergebnisse | | |
|---|---|---|---|---|---|---|---|---|---|
| | Sn | Sb | Cu | Pb | Bi | Sonstige | Optische Bewertung | | Verschleiß [μm] |
| 1 | Rem. | 11 | 4,0 | 0 | 0,4 | | 2,0 | | 2 |
| 2 | Rem. | 6 | 0,5 | 0,2 | | ZrO2: 0,9% | 1,5 | | 4 |
| 3 | Rem. | 0 | 3,0 | 0,03 | | | 3,0 | | 3 |
| 4 | Rem. | 8 | 0,4 | 0,3 | | | 2,0 | | 3 |
| 5 | Rem. | 7 | 1,0 | 0,7 | | | 4,0 | | 10 |
| 6 | Rem. | 0 | 6,0 | 1,1 | | | 5,0 | | 8 |

Tabelle 2: Erfindungsgemäße Gleitschichten

| Bsp. | Sb | Cu | Pb | Sonstige | Orientierungsindex M{hkl} | Optische Bewertung | Verschleiß [μm] |
|---|---|---|---|---|---|---|---|
| 1 | 11 | 4 | 0,3 | | M{101} = 3,3 | 2,0 | 2 |
| 2 | 7 | 0,7 | 0,5 | | M{220} = 7,5 | 2,5 | 3 |
| 3 | 6 | 0,3 | 0,3 | Bi: 0,1 | M{301} = 6,7 | 2,0 | 4 |
| 4 | | 2 | 0,3 | Zn: 1 | M{211} = 6,3 | 2,0 | 6 |

Tabelle 2: Fortsetzung

| | | | | | | | |
|---|---|---|---|---|---|---|---|
| 5 | | 3 | <0,05 | Ni: 0,2 | M{211} = 4,8<br>M{321} = 3,1 | 2,0 | 4 |
| 6 | | 4 | <0,05 | Bi: 0,25 | M{321}=9,7<br>M{431} = 7,5 | 2,0 | 2 |
| 7 | | 5 | 0,4 | | M{101}=3,1<br>M{211}=3,3<br>M{112}=3,0 | 2,0 | 2 |
| 8 | | 10 | 0,9 | ZrO$_2$: 1,5 | M{220}=11,3 | 3,0 | 2 |
| 9 | 3 | | 1 | SiC: 0,3 | M{211}=8,3 | 1,5 | 4 |
| 10 | 5 | 0,6 | 0,2 | ZrO$_2$: 0,4 | M{321}=12,3 | 1,5 | 3 |
| 11 | 7 | 3,5 | <0,05 | | M{431}=6,3 | 2,0 | 4 |
| 12 | 9 | 1 | <0,05 | Bi: 0,3<br>Zn: 0,3 | M{411}=4,1 | 2,5 | 3 |
| 13 | 10 | 3 | 0,8 | | M{301}=3,6 | 3,0 | 3 |

(fortgesetzt)

| 14 | 11 | 1,3 | 0,2 | Ag: 0,8 | M{220}=7,9 | 2,5 | 4 |
| 15 | 13 | 5 | 0,4 | | M{321}=5,9 | 1,5 | 2 |
| 16 | 15 | 3 | <0,05 | | M{211}=4,3 | 3,0 | 3 |

Tabelle 3: Gleitschichten nach dem Stand der Technik

| Bsp. | Sb | Cu | Pb | Sonstige | Maximaler Orientierungsin-dex M{hkl} | Optische Bewertung | Verschleiß [μm] |
|---|---|---|---|---|---|---|---|
| I | 6 | 1 | 1 | | M{220}= 2,9 | 3,5 | 7 |
| II | 5 | 0,6 | 0,2 | $ZrO_2$: 0,4 | M{220}= 1,5 | 2,5 | 4 |
| III | | 6 | | Zn: 0,8 | M{200}= 1,8 | 4,0 | 5 |
| IV | | 2 | | | M{101}= 2,3 | 3,5 | 8 |
| V | | 3 | 0,3 | Ni: 0,5 | M{321}= 1,9 | 3,0 | 7 |
| VI | | 6 | <0,05 | | M{321}= 1,3 | 4,0 | 6 |
| VII | 5 | 0,5 | <0,05 | | M{200}= 2,5 | 3,5 | 9 |
| VIII | 10 | 4 | 0,4 | | M{220}= 2,8 | 4,0 | 4 |
| IX | 15 | 2 | 0,1 | | M{211}= 1,7 | 5,0 | 12 |
| X | | 5 | | Ag: 2 | M{431}= 2,2 | 3,5 | 3 |
| XI | 8 | 2 | | Bi: 0,5 | M{112}= 2,4 | 4,0 | 5 |

Es zeigt sich deutlich, dass im Vergleich zu den Beispielen nach dem Stand der Technik die erfindungsgemäßen Gleitschichten 4 bessere Werte bzgl. des Verschleißes und der Dauerfestigkeit aufweisen, insbesondere beim direkten Vergleich von Schichten gleicher oder ähnlicher chemischer Zusammensetzung.

Aus den gesammelten Versuchsergebnissen, die hier nicht alle zur Gänze wiedergegeben werden können, hat sich gezeigt, dass hinsichtlich der Verschleißbeständigkeit und der Fressneigung vorteilhafte Gleitschichten 4 erhalten werden, wenn die Beta-Zinnkörner zumindest einen ausgeprägten Orientierungsgrad aufweisen. Mit zumindest einem ist im Sinne der Erfindung gemeint, dass es auch möglich ist, dass neben einer Hauptorientierung der Beta-Zinnkörner auch eine bevorzugte Orientierung in einer oder mehreren weitern Richtung vorhanden sein kann.

Wie bereits voranstehend erwähnt, treten bei Proben, die bereits auf einem Teststand gelaufen sind oder die im Zuge der Herstellung nach der Abscheidung der Gleitschicht 4 bearbeitet wurden, z.B. durch Feinbohren, hinsichtlich der Röntgendiffraktometrie aufgrund der geringen Eindringtiefe der Röntgenstrahlen insofern Probleme auf, als die tatsächliche Struktur der Gleitschicht 4, die durch diese Nachbehandlungen nicht beeinflusst wird, erst nach einer Vorbehandlung im gesamten Ausmaß zu Tage tritt. Dieselben Probleme treten auch auf, wenn z.B. ein so genannter Zinnflash auf die Oberfläche der Gleitschicht 4 aufgebrachte wird. Mit anderen Worten werden die Messergebnisse stark von der Oberflächenbehandlung der Gleitschicht beeinflusst, indem nämlich ohne Vorbehandlung der Probe nicht diese selbst gemessen wird, sondern Ablagerungen an der Oberfläche. Die Oberfläche der zu untersuchenden Probe muss daher vorbehandelt bzw. "freigelegt" werden.

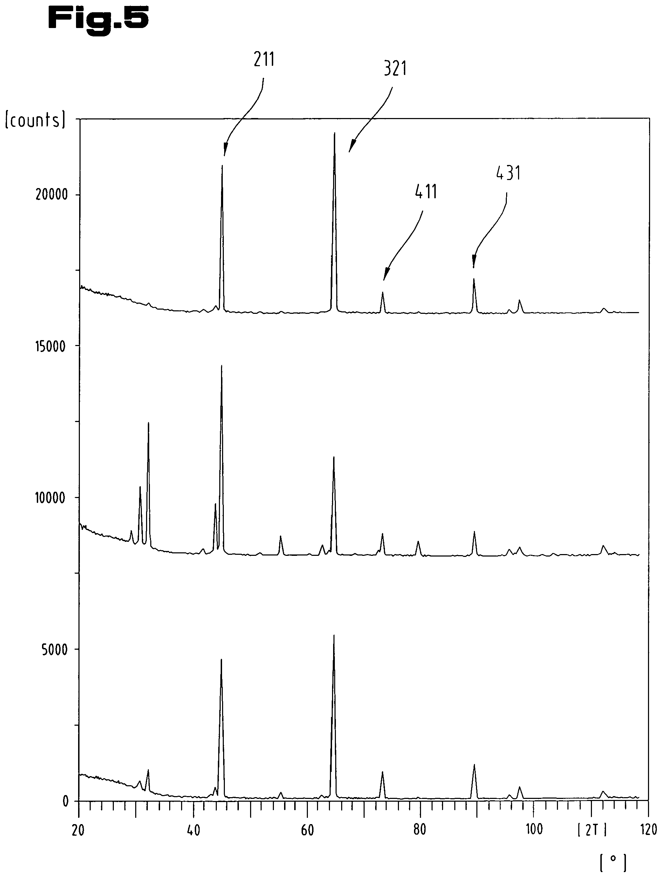

Der Einfluss dieses Oberflächenproblems auf das Messergebnis ist in Fig. 5 wiedergegeben, wobei als Vorbehandlung das Ionenätzen gewählt wurde. Bekanntlich wird dabei die Oberfläche des Substrates mit Ionen beschossen, ähnlich dem Sputterverfahren.

In Fig. 5 zeigt das oberste Diffraktogramm eine Oberfläche einer Gleitschicht 4 aus SnSb6CuPb, wie sie auf einer Gleitlagerhalbschale aufgetragen wurde, in ungestörten Zustand. Das mittlere Diffraktogramm in Fig. 5 wurde an der Oberfläche derselben Halbschale aufgenommen, nachdem diese der oben beschrieben Prüfung unterworfen wurde. Durch den im Zuge der Prüfung aufgetretenen leichten Verschleiß wurde das Messergebnis stark beeinflusst.

Das unterste Diffraktogramm in Fig. 5 wurde wiederum an der Oberfläche derselben Halbschale nach Prüfung und Entfernung der Störzone aufgenommen. Zur Entfernung der Störzone wurde die Oberfläche 10 Mal für je 2 Minuten im Argonplasma bei 6 kV ionengeätzt, wobei der Ionenstrahl in einem Winkel von 45° zur Oberfläche stand, mit jeweils 5 Minuten Pause zwischen den Ätzungen, um die Überhitzung bzw. das Aufschmelzen der Probe zu verhindern.

Der Einfluss der Vorbehandlung ist aus dem Vergleich der Diffraktogramme deutlich zu sehen, indem nämlich durch das ausreichende Ionenätzen die Intensität einzelner Peaks, die nicht von den orientierten Beta-Zinnkörnen stammen, deutlich geringer wird.

Es wird vermutet, dass eine weitere Verbesserung der tribologischen Eigenschaften der Gleitschicht 4 erreicht werden kann, wenn die Beta-Zinnkörner eine bestimmte Mindestkorngröße aufweisen.

Die Ausführungsbeispiele zeigen mögliche Ausführungsvarianten der Gleitschicht 4 bzw. des Mehrschichtgleitlagers 1, wobei an dieser Stelle bemerkt sei, dass die Erfindung nicht auf die speziell dargestellten Ausführungsvarianten derselben eingeschränkt ist. Vor allem können die in Tabelle 1 wiedergegeben Zusammensetzungen von Gleitschichten 4 den Gegenstand von jeweils eigenständigen Erfindungen darstellen.

**Bezugzeichenaufstellung**

1 Mehrschichtgleitlager

2 Stützmetallschicht

3 Lagermetallschicht

4 Gleitschicht

**Patentansprüche**

1. Gleitschicht (4) für ein Mehrschichtgleitlager (1) aus einer Zinnbasislegierung, die neben Zinn als Hauptlegierungselement zumindest ein Element aus der Gruppe Antimon und Kupfer, gegebenenfalls Blei und/oder Bismut, sowie aus der Herstellung der Elemente stammende unvermeidbare Verunreinigungen enthält, wobei der Antimonanteil maximal 20 Gew.-%, der Kupferanteil maximal 10 Gew.-% und der Summenanteil an Blei und Bismut maximal 1,5 Gew.-% und der Summenanteil an Kupfer und Antimon zwischen 2 Gew.-% und 22 Gew.-% betragen, und wobei Zinn in Form intermetallischer Phasen und als Zinnphase mit Beta-Zinnkörnern vorliegt, **dadurch gekennzeichnet, dass** die Beta-Zinnkörner in der Zinnbasislegierung zumindest eine Vorzugsorientierung aufweisen, wobei ein Orientierungsindex M{hkl} gemäß der Formel

$$M\{hkl\} = \frac{I\{hkl\}\sum I^{0}\{hkl\}}{I^{0}\{hkl\}\sum I\{hkl\}}$$

zumindest einer Netzebenenschar M{hkl} den Wert 3,0 aufweist oder übersteigt, wobei I{hkl} die Röntgenbeugungsintensitäten für die {hkl} Ebenen der Gleitschicht und $I^{0}$\{hkl\} die Röntgenbeugungsintensitäten der völlig unorientierten Zinn-Pulverprobe darstellen.

2. Gleitschicht (4) nach Anspruch 1, **dadurch gekennzeichnet, dass** die Beta-Zinnkörner nach zumindest einer der Ebenen {hkl} gemäß Miller Index orientiert sind, wobei h jeweils um 1 größer ist als k und h maximal einen Wert von 4 annimmt.

3. Gleitschicht (4) nach Anspruch 2, **dadurch gekennzeichnet, dass** die Fläche unter dem Peak, die von Beta-Zinnkörnern erzeugt wird, die nach {321} gemäß Miller Index orientiert sind, zumindest 1,2 mal so groß ist wie die Fläche unter dem Peak, die von nach {421} gemäß Miller Index orientierten Beta-Zinnkörnern erzeugt wird.

4. Gleitschicht (4) nach Anspruch 1, **dadurch gekennzeichnet, dass** die Beta-Zinnkörner zu mehr als 30 % nach {220} gemäß Miller Index orientiert sind, ausgedrückt durch die Fläche unterhalb des Peaks, die durch diese Orientierung der Beta-Zinnkörner erzeugt wird.

5. Gleitschicht (4) nach einem der Ansprüche 1 bis 4, **dadurch gekennzeichnet, dass** der Antimonanteil zwischen 5 Gew.-% und 15 Gew.-% beträgt.

6. Gleitschicht nach einem der Ansprüche 1 bis 5, **dadurch gekennzeichnet, dass** der Kupfergehalt zwischen 0,5 Gew.-% und 5 Gew.-% beträgt.

7. Gleitschicht (4) nach einem der Ansprüche 1 bis 6, **dadurch gekennzeichnet, dass** der Bleigehalt und/oder der Bismutgehalt zwischen 0,2 Gew.-% und 0,5 Gew.-% beträgt.

8. Gleitschicht (4) nach einem der Ansprüche 1 bis 6, **dadurch gekennzeichnet, dass** der Bleigehalt maximal 0,1 Gew.-% beträgt.

9. Gleitschicht (4) nach einem der Ansprüche 1 bis 8, **dadurch gekennzeichnet, dass** in der Zinnbasislegierung zumindest ein Element aus einer Gruppe umfassend Zirkonium, Silizium, Zink, Nickel und Silber in einem Anteil von in Summe maximal 3 Gew.-% enthalten ist bzw. sind.

10. Gleitschicht (4) nach Anspruch 9, **dadurch gekennzeichnet, dass** Zirkonium bzw. Silizium in Form von $ZrO_2$- bzw. SiC-Partikeln in der Zinnbasislegierung vorliegt bzw. vorliegen.

11. Gleitschicht (4) nach Anspruch 10, **dadurch gekennzeichnet, dass** die $ZrO_2$- bzw. SiC - Partikeln einen mittleren Durchmesser zwischen 0,01 $\mu$m und 1 $\mu$m aufweisen.

12. Mehrschichtgleitlager (1) umfassend zumindest eine Stützmetallschicht (2), eine Gleitschicht (4) und gegebenenfalls eine zwischen der Gleitschicht (4) und der Stützmetallschicht (2) angeordnete Lagermetallschicht (3), **dadurch gekennzeichnet**, das die Gleitschicht (4) nach einem der vorhergehenden Ansprüche gebildet ist.

13. Mehrschichtgleitlager (1) nach Anspruch 12, **dadurch gekennzeichnet, dass** zwischen der Lagermetallschicht (3) und der Gleitschicht (4) eine Zwischenschicht angeordnet ist, die aus einer oder mehreren Teilschichten besteht, die galvanisch abgeschieden oder durch Diffusion gebildet werden, und jede der Teilschichten eines oder mehrere Elemente der Gruppe Chrom, Nickel, Eisen, Kobalt, Kupfer und Zinn enthält.

14. Mehrschichtgleitlager (1) nach Anspruch 14, **dadurch gekennzeichnet, dass** die Zwischenschicht eine Härte aufweist die um mindestens das Dreifache größer ist als die Härte der Gleitschicht (4) und auch größer ist als die Härte des Untergrundmaterials.

**Claims**

1. Sliding layer (4) for a multi-layered friction bearing (1) made from a tin-based alloy which, in addition to tin, contains at least one element from the group comprising antimony and copper as the main alloying element, optionally lead and/or bismuth, and unavoidable impurities originating from production of the elements, the proportion of antimony being at most 20% by weight, the proportion of copper being at most 10% by weight and the total proportion of lead and bismuth being at most 1.5% by weight and the total proportion of copper and antimony being between 2% by weight and 22% by weight, and tin being present in the form of inter-metallic phases and as a tin phase with beta-tin grains, **characterised in that** the beta-tin grains in the tin-based alloy have at least one preferred orientation and an orientation index M{hkl} based on the formula

$$M\{hkl\} = \frac{I\{hkl\} \sum I^0\{hkl\}}{I^0\{hkl\} \sum I\{hkl\}}$$

of at least one set of lattice planes M{hkl} has or exceeds the value 3.0, wherein I{hkl} stands for the X-ray diffraction intensities for the {hkl} planes of the sliding layer wherein $I^0${hkl} stands for the X-ray diffraction intensities of the totally non-oriented tin powder sample.

2. Sliding layer (4) according to claim 1, **characterised in that** the beta-tin grains are oriented along at least one of the planes {hk1} according to the Miller Index, and h is greater than k by 1 respectively and h assumes a value of at most 4.

3. Sliding layer (4) according to claim 2, **characterised in that** the surface underneath the peak created by beta-tin grains which are oriented along {321} according to the Miller Index is at least 1.2 times bigger than the surface underneath the peak created by beta-tin grains oriented along {431} according to the Miller Index.

**4.** Sliding layer (4) according to claim 1, **characterised in that** the beta-tin grains are oriented along {220} to a degree of more than 30% according to the Miller Index, expressed by the surface underneath the peak created by this orientation of the beta-tin grains.

**5.** Sliding layer (4) according to one of claims 1 to 4, **characterised in that** the proportion of antimony is between 5% by weight and 15% by weight.

**6.** Sliding layer according to one of claims 1 to 5, **characterised in that** the copper content is between 0.5% by weight and 5% by weight.

**7.** Sliding layer (4) according to one of claims 1 to 6, **characterised in that** the lead content and/or the bismuth content is between 0.2% by weight and 0.5% by weight.

**8.** Sliding layer (4) according to one of claims 1 to 6, **characterised in that** the lead content is at most 0.1% by weight.

**9.** Sliding layer (4) according to one of claims 1 to 8, **characterised in that** the tin-based alloy contains at least one element from a group comprising zirconium, silicon, zinc, nickel and silver in a proportion in total of at most 3% by weight.

**10.** Sliding layer (4) according to claim 9, **characterised in that** zirconium and/or silicon is or are present in the tin-based alloy in the form of $ZrO_2$ or SiC particles.

**11.** Sliding layer (4) according to claim 10, **characterised in that** the $ZrO_2$ and SiC particles have a mean diameter of between 0.01 $\mu$m and 1 $\mu$m.

**12.** Multi-layered friction bearing (1) comprising at least one metal base layer (2), a sliding layer (4) and optionally a bearing metal layer (3) disposed between the sliding layer (4) and the metal base layer (2), **characterised in that** the sliding layer (4) is formed according to one of the preceding claims.

**13.** Multi-layered friction bearing (1) according to claim 12, **characterised in that** an intermediate layer is disposed between the bearing metal layer (3) and the sliding layer (4) which is made up of one or more partial layers galvanically deposited or formed by diffusion, and each of the partial layers contains one or more elements from the group chromium, nickel, iron, cobalt, copper and tin.

**14.** Multi-layered friction bearing (1) according to claim 13, **characterised in that** the intermediate layer has a hardness which is at least three times greater than the hardness of the sliding layer (4) and is also greater than the hardness of the base material.

**Revendications**

**1.** Couche de glissement (4) pour un palier lisse multicouches (1) en un alliage à base d'étain, qui outre de l'étain contient en tant qu'élément d'alliage principal au moins un élément du groupe consistant en l'antimoine et le cuivre, éventuellement le plomb et/ou le bismuth, ainsi que des impuretés inévitables découlant de la fabrication des éléments, la proportion de l'antimoine étant au maximum de 20 % en poids, la proportion du cuivre étant au maximum de 10 % en poids et la somme des proportions du plomb et du bismuth étant au maximum de 1,5 % en poids et la somme des proportions du cuivre et de l'antimoine étant comprise entre 2 % en poids et 22 % en poids, l'étain se présentant sous forme de phases intermétalliques ou en tant que phase étain avec des grains d'étain bêta, **caractérisée en ce que** les grains d'étain bêta, dans l'alliage à base d'étain, présentent au moins une orientation préférentielle, un indice de direction M{hkl} selon la formule

$$M\{hkl\} = \frac{I\{hkl\}\sum I^0\{hkl\}}{I^0\{hkl\}\sum I\{hkl\}}$$

d'au moins une famille de plans réticulaires M{hkl} présente la valeur 3,0 ou lui est supérieure, I{hkl} représentant les intensités de diffraction des rayons X pour les plans {hkl} de la couche de glissement et $I^0${hkl} les intensités de diffraction des rayons X de l'échantillon de poudre d'étain entièrement non orientée.

2. Couche de glissement (4) selon la revendication 1, **caractérisée en ce que** les grains d'étain bêta sont orientés selon au moins des plans {hkl} selon l'indice de Miller, chaque h étant de 1 supérieur à k et h et prenant au maximum une valeur de 4.

3. Couche de glissement (4) selon la revendication 2, **caractérisée en ce que** l'aire sous le pic produit par les grains d'étain bêta qui sont orientés selon {321} selon l'indice de Miller est au moins 1,2 fois plus grande que l'aire sous le pic qui est produit par des grains d'étain bêta orientés selon {431} selon l'indice de Miller.

4. Couche de glissement (4) selon la revendication 1, **caractérisée en ce que** les grains d'étain bêta sont, à raison de plus de 30 %, orientés selon {220} selon l'indice de Miller, exprimé par l'aire sous le pic qui est produit par cette orientation des grains d'étain bêta.

5. Couche de glissement (4) selon l'une des revendications 1 à 4, **caractérisée en ce que** la proportion de l'antimoine est comprise entre 5 % en poids et 15 % en poids.

6. Couche de glissement (4) selon l'une des revendications 1 à 5, **caractérisée en ce que** la teneur en cuivre est comprise entre 0,5 % en poids et 5 % en poids.

7. Couche de glissement (4) selon l'une des revendications 1 à 6, **caractérisée en ce que** la teneur en plomb et/ou la teneur en bismuth sont comprises entre 0,2 % en poids et 0,5 % en poids.

8. Couche de glissement (4) selon l'une des revendications 1 à 6, **caractérisée en ce que** la teneur en plomb est au maximum de 0,1 % en poids.

9. Couche de glissement (4) selon l'une des revendications 1 à 8, **caractérisée en ce que** l'alliage à base d'étain contient au moins un élément du groupe comprenant le zirconium, le silicium, le zinc, le nickel et l'argent, selon des proportions dont la somme est au maximum de 3 % en poids.

10. Couche de glissement (4) selon la revendication 9, **caractérisée en ce que** le zirconium et le silicium sont présents sous forme de particules respectivement de $Zr0_2$ et de SiC dans l'alliage à base d'étain.

11. Couche de glissement (4) selon la revendication 10, **caractérisée en ce que** les particules de $Zr0_2$ et de SiC présentent un diamètre moyen compris entre 0,01 $\mu$m et 1 $\mu$m.

12. Palier lisse multicouches (1) comprenant au moins une couche métallique d'appui (2), une couche de glissement (4) et éventuellement une couche de métal antifriction (3) disposée entre la couche de glissement (4) et la couche métallique d'appui (2), **caractérisé en ce que** la couche de glissement (4) est formée selon l'une des revendications précédentes.

13. Palier lisse multicouches (1) selon la revendication 12, **caractérisé en ce qu'**entre la couche de métal antifriction (3) et la couche de glissement (4) est disposée une couche intermédiaire, qui est constituée d'une ou plusieurs couches partielles, qui sont formées par dépôt électrolytique ou par diffusion, et chacune des couches partielles contient un ou plusieurs éléments du groupe consistant en le chrome, le nickel, le fer, le cobalt, le cuivre et l'étain.

14. Palier lisse multicouches (1) selon la revendication 13, **caractérisé en ce que** la couche intermédiaire présente une dureté qui est au moins le triple de la dureté de la couche de glissement (4), et de même est plus élevée que la dureté du matériau sous-jacent.

# Fig.1

# Fig.2

# Fig.3

# Fig.4

# Fig.5

# Fig.6

# Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8206353 U1
- DE 202007018616 U1
- GB 2375801 A
- DE 102007030017 B4
- DE 10054461 A1
- DE 19728777 A1